# FASCICULE DE BREVET EUROPEEN

(11) **EP 0 761 517 B1**
(45) Date de publication et mention de la délivrance du brevet: **24.05.2000**
(21) Numéro de dépôt: 96401851.9
(22) Date de dépôt: 29.08.1996
(51) Int. Cl.: B60S 1/52

(54) **Essuie-glace de véhicule automobile muni de moyens perfectionnés d'accrochage d'une canalisation de produit de lavage**
Kraftfahrzeug-Scheibenwischer mit Befestigungsvorrichtung für die Waschwasser-Rohrleitung
Motor vehicle windscreen wiper having fastening means for a cleaning fluid conduit

(30) Priorité: 30.08.1995 FR 9510325
(43) Date de publication de la demande: 12.03.1997
(73) Titulaire: VALEO SYSTEMES D'ESSUYAGE, 78321 La Verrière (FR)
(72) Inventeur: Boissac, Jean-Paul, 86100 Chatellerault (FR)
(74) Mandataire: Kohn, Philippe

(56) Documents cités:
- EP-A- 0 729 869
- DE-A- 1 912 037
- DE-A- 2 425 864
- DE-A- 2 509 876
- FR-A- 2 369 951

## Description

L'invention concerne un essuie-glace de véhicule automobile.

L'invention concerne plus particulièrement un essuie-glace de véhicule automobile du type comportant un bras d'essuie-glace qui porte, à une première extrémité longitudinale, des moyens d'articulation sur une tête d'entraînement en balayage alterné, et qui porte à son extrémité opposée un balai d'essuie-glace, du type dans lequel le bras comporte, au moins à sa première extrémité d'articulation, deux ailes latérales longitudinales parallèles réunies par un dos supérieur qui délimitent entre eux une cavité ouverte en direction de la vitre à essuyer, du type dans lequel l'essuie-glace est muni d'un dispositif d'arrosage d'une vitre à essuyer comportant une canalisation d'alimentation en produit de lavage qui s'étend le long du bras et qui comporte une première partie liée au véhicule, une deuxième partie liée au bras et une portion de jonction souple des deux parties.

Selon un mode de réalisation connu d'un tel type d'essuie-glace, la première partie de la canalisation traverse un panneau de carrosserie du véhicule pour être reliée à un réservoir de liquide de lavage et la canalisation est par ailleurs fixée par sa deuxième partie sur le bras d'essuie-glace.

Afin de ne pas entraver les déplacements de l'essuie-glace par rapport au panneau de carrosserie sur lequel il est fixé ou par rapport à la vitre à essuyer, il est donc nécessaire que la canalisation possède une portion de jonction entre sa première et sa deuxième partie, qui soit souple et qui comporte une longueur libre apte à compenser l'éloignement et le rapprochement des première et deuxième parties de la canalisation lors des déplacements de l'essuie-glace.

Cette partie de jonction ne peut être fixée sur le véhicule ou sur le bras et elle est donc généralement apparente, ce qui est nuisible à l'esthétique de l'essuie-glace.

Le document DE-A-1.912.037 propose un essuie-glace du type vu précédemment dans lequel la portion de jonction de la canalisation est guidée et maintenue à l'intérieur de la cavité de l'extrémité d'articulation du bras par des moyens de guidage comportant des parties du bras.

L'invention vise à proposer un essuie-glace de ce type dont la conception soit adaptée à sa réalisation par moulage en matière plastique, selon les enseignements du document EP-A-0.729.869 déposé le 22.02.1996 sous priorité en France du 28.02.1996, et permette un montage simple et fiable de la canalisation sur le bras en évitant tout risque de démontage accidentel en fonctionnement.

Dans ce but, l'invention propose un essuie-glace du type mentionné précédemment et divulgué dans DE-A-1 912 037, caractérisé en ce que les moyens de guidage et de maintien sont réalisés venus de matière par moulage en matière plastique avec le bras et comportent :
- un anneau de guidage, d'axe parallèle à la direction longitudinale du bras et partiellement ouvert, dans lequel la portion de jonction de la canalisation est introduite radialement pour y être reçue ;
- et un crochet agencé à l'intérieur de la cavité du bras, qui comporte une première branche qui s'étend transversalement depuis une face interne d'une aile de la cavité, sur laquelle repose la portion de jonction de la canalisation et qui est prolongée par une seconde branche recourbée en direction du dos supérieur de la cavité.

Selon des variantes de réalisation de l'invention :
- l'anneau de guidage est agencé sur le chant inférieur d'une des ailes de la cavité, à l'extrémité longitudinale de la cavité adjacente aux moyens d'articulation du bras, et l'anneau guide la canalisation à son entrée dans la cavité ;
- le crochet s'étend longitudinalement sur une portion importante de la cavité de manière à former une gouttière de maintien de la canalisation ;
- les moyens de guidage permettent un coulissement longitudinal de la portion de jonction de la canalisation de manière que la portion de jonction compense les rapprochements et les éloignements des première et deuxième parties de la canalisation lors des déplacements du bras par rapport au véhicule en se déformant à l'intérieur de la cavité dans laquelle elle est maintenue par les moyens de guidage.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique d'un essuie-glace selon l'invention ;
- la figure 2 est une vue partielle en perspective avec arrachement d'un bras d'essuie-glace conforme aux enseignements de l'invention ;
- la figure 3 est une vue de dessous de l'extrémité d'articulation d'un bras d'essuie-glace selon l'invention ; et
- les figures 4 et 5 sont des vues en section selon les lignes 4-4 et 5-5 de la figure 3.

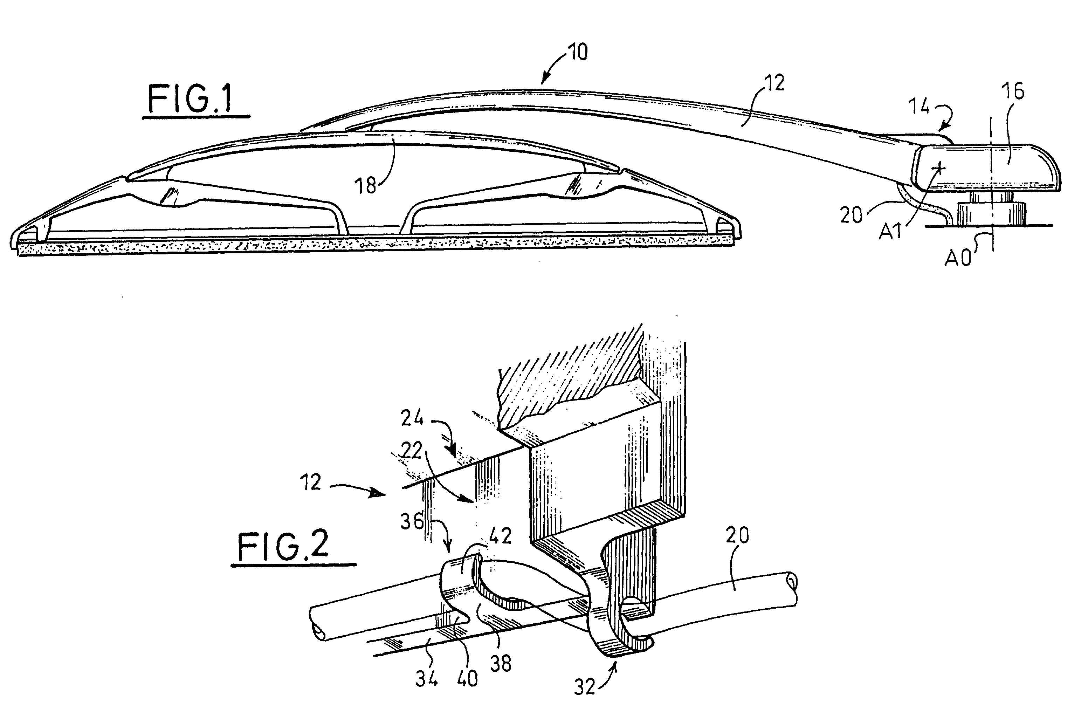

On a représenté sur la figure 1 un essuie-glace 10 de véhicule automobile qui comporte un bras d'essuie-glace 12 dont une première extrémité longitudinale 14 porte des moyens d'articulation d'axe A1 sur une tête 16 d'entraînement en balayage alterné autour d'un axe A0, sensiblement perpendiculaire au plan d'une vitre à essuyer (non représentée).

Le bras d'essuie-glace porte à sa seconde extrémité longitudinale opposée un balai d'essuie-glace 18.

Le bras 12 est susceptible de pivoter autour de l'axe A1 depuis une position active dans laquelle le balai d'essuie-glace 18 est en contact avec la vitre à essuyer vers une position soulevée qui permet notamment le remplacement du balai 18.

L'essuie-glace 10 comporte un dispositif de projection de liquide de lavage (non représenté) sur la vitre à essuyer qui est relié à un réservoir de liquide (non représenté) par une canalisation dont une première partie reliée au réservoir est fixe par rapport au véhicule et dont une deuxième partie reliée au dispositif de projection est fixée sur le bras d'essuie-glace 12 de manière connue.

On a représenté sur la figure 1 une portion de jonction 20 des première et deuxièmes parties de la canalisation qui est souple et qui destinée à éviter que la canalisation n'entrave les déplacements du bras d'essuie-glace 12 tant autour de son axe A0 de balayage rotatif alterné, qu'autour de son axe A1 d'articulation.

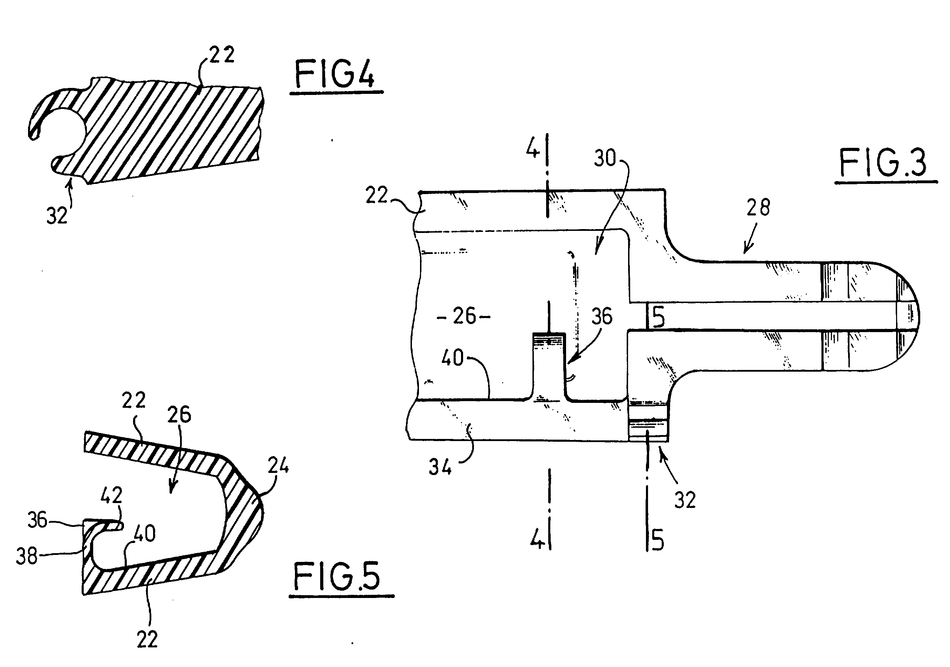

Comme on peut le voir plus particulièrement sur les figures 3 et 5, l'extrémité longitudinale d'articulation 14 du bras 12 comporte deux ailes latérales longitudinales parallèles 22 qui sont réunies par un dos supérieur 24 de manière à délimiter une cavité 26 qui est ouverte en direction de la vitre à essuyer. Des moyens d'articulation 28 du bras 12 sur la tête d'entraînement 16 délimitent longitudinalement la cavité 26 à son extrémité 30 adjacente à la tête d'entraînement 16.

Conformément aux enseignements de l'invention, le bras 12 comporte des moyens d'accrochage et de guidage de la portion de jonction 20 de la canalisation qui sont réalisés venus de matière par moulage avec le bras 12.

Comme mieux visible sur les figures 2 à 5, à l'extrémité longitudinale 30 de la cavité 26, un anneau 32 partiellement ouvert, d'axe longitudinal, est agencé sur un chant inférieur 34 d'une aile 22 du bras 12.

L'anneau 32 est donc situé à l'extrémité longitudinale 30 de la cavité 26, légèrement en dessous du niveau de la face ouverte de cette cavité, et est utilisé pour guider la canalisation 20 à l'entrée de la cavité 26.

L'anneau 32 est partiellement ouvert, ce qui permet d'introduire la portion centrale souple 20 de la canalisation en l'engageant radialement dans l'anneau 32.

Afin de maintenir la portion de jonction 20 de la canalisation à l'intérieur de la cavité 26, il est prévu des moyens complémentaires de guidage.

Un crochet de maintien 36 est agencé de préférence sur l'aile latérale 22 qui porte l'anneau 32.

Le crochet 36 porte une première branche 38 qui s'étend perpendiculairement depuis une face interne 40 de l'aile 22 en direction de l'autre aile 22 et qui est prolongée par une seconde branche 42 recourbée en direction du dos supérieur 24 de la cavité 26.

Le crochet 36, en forme de L, est agencé dans la portion inférieure de l'aile 22, et la portion de jonction 20 de la canalisation est destinée à reposer sur la première branche 38 du crochet 36, sur laquelle elle est guidée latéralement par la seconde branche 42 du crochet 36 et par l'aile 22 de la cavité 26.

De préférence, la portion de jonction 20 de la canalisation est libre de coulisser longitudinalement par rapport à l'anneau 32 et au crochet 36 de façon à pouvoir compenser les mouvements relatifs des première et deuxième parties de la canalisation.

Ainsi, l'anneau 32 et le crochet 36 permettent de diriger et de maintenir la portion de jonction 20 de la canalisation dans la cavité 26, ce qui permet d'éviter qu'elle ne soit apparente depuis l'extérieur.

Un autre avantage de l'invention est que, la canalisation étant abritée à l'intérieur de la cavité, on évite ainsi les risques de frottement ou de coincement de la canalisation qui seraient susceptibles de la détériorer et d'entraîner sa rupture ainsi que les agressions extérieures telles que de chocs par exemple.

A titre de variante, on peut envisager de réaliser le crochet de maintien sous la forme d'une gouttière de profil identique au crochet 36 mais qui s'étend longitudinalement sur une portion importante de la cavité 26 de manière à améliorer le guidage de la canalisation.

Dans l'exemple de réalisation qui est représenté sur les figures, le bras d'essuie-glace 12 est réalisé par moulage en matière plastique et l'anneau 32 et le crochet 36 sont ainsi facilement réalisables venus de matière avec le bras.

On peut également envisager de réaliser un bras conforme aux enseignements de l'invention par découpage et pliage d'une tôle d'acier.

## Revendications

1. Essuie-glace de véhicule automobile, du type comportant un bras d'essuie-glace (12) qui porte, à une première extrémité longitudinale (14), des moyens d'articulation (28) sur une tête d'entraînement (16) en balayage alterné, et qui porte à son extrémité opposée un balai d'essuie-glace (17), du type dans lequel le bras comporte, au moins à sa première extrémité d'articulation (14), deux ailes latérales longitudinales (22) parallèles réunies par un dos supérieur (24) qui délimitent entre eux une cavité (26) ouverte en direction d'une vitre à essuyer, et du type dans lequel l'essuie-glace (10) est muni d'un dispositif d'arrosage de la vitre comportant une canalisation d'alimentation qui s'étend le long du bras (12) et qui comporte une première partie liée au véhicule, une deuxième partie liée au bras et une portion de jonction (20) souple des deux parties, qui est guidée et maintenue à l'intérieur de la cavité (26) de l'extrémité d'articulation (14) du bras (12) par des moyens de guidage et de maintien (32, 36), caractérisé en ce que les moyens de guidage et de maintien sont réalisés venus de matière par moulage en matière plastique avec le bras (12) et comportent :
- un anneau de guidage (32), d'axe parallèle à la direction longitudinale du bras (12) et partiellement ouvert, dans lequel la portion de jonction (20) de la canalisation est introduite radialement pour y être reçue ;
- et un crochet (36) agencé à l'intérieur de la cavité (26) du bras (12), qui comporte une première branche (38) qui s'étend transversalement depuis une face interne (40) d'une aile (22) de la cavité (26), sur laquelle repose la portion de jonction (20) de la canalisation et qui est prolongée par une seconde branche (42) recourbée en direction du dos supérieur (24) de la cavité (26).

2. Essuie-glace selon la revendication 1, caractérisé en ce que l'anneau de guidage (32) est agencé sur le chant inférieur (34) d'une des ailes (22) de la cavité (26), à l'extrémité longitudinale (30) de la cavité (26) adjacente aux moyens d'articulation (28) du bras (12), et en ce que l'anneau (32) guide la canalisation à son entrée dans la cavité (26).

3. Essuie-glace selon la revendication 1, caractérisé en ce que le crochet (36) s'étend longitudinalement sur une portion importante de la cavité (26) de manière à former une gouttière de maintien de la canalisation.

4. Essuie-glace selon l'une quelconque des revendications précédentes, caractérisé en ce que les moyens de guidage permettent un coulissement longitudinal de la portion de jonction (20) de la canalisation de manière que la portion de jonction (20) compense les rapprochements et les éloignements des première et deuxième parties de la canalisation lors des déplacements du bras par rapport au véhicule en se déformant à l'intérieur de la cavité (26) dans laquelle elle est maintenue par les moyens de guidage (32, 36).

## Patentansprüche

1. Kraftfahrzeugscheibenwischer mit einem Scheibenwischerarm (12), der an einem ersten Längsende Gelenkmittel (28) zur Anlenkung an einem Antriebskopf (16) für eine Pendelwischbewegung trägt und der an seinem gegenüberliegenden Ende ein Scheibenwischerblatt (18) trägt, wobei der Wischerarm, wenigstens an seinem ersten Gelenkende (14), zwei durch einen oberen Rücken (24) verbundene parallele Längsseitenflügel (22) trägt, die eine zwischen ihnen befindliche, in Richtung der zu wischenden Scheibe offene Austiefung (26) begrenzen, und wobei der Scheibenwischer (10) mit einer Spritzvorrichtung zum Besprühen der zu wischenden Scheibe versehen ist, die eine Waschflüssigkeitszuleitung umfaßt, die sich entlang dem Wischerarm (12) erstreckt und die einen mit dem Fahrzeug verbundenen ersten Teil, einen mit dem Wischerarm verbundenen zweiten Teil und einen biegsamen Verbindungsabschnitt (20) zur Verbindung der beiden Teile umfaßt, der im Innern der Austiefung (26) des Gelenkendes (14) des Wischerarms (12) durch Führungs- und Haltemittel (32, 36) geführt und gehalten wird, **dadurch gekennzeichnet**, daß die Führungs- und Haltemittel mit dem Wischerarm (12) einstückig als Formteil aus Kunststoff ausgeführt sind und folgendes umfassen:
- einen teilweise offenen Führungsring (32) mit einer zur Längsrichtung des Wischerarms (12) parallelen Achse, in den der Verbindungsabschnitt (20) der Zuleitung radial eingeführt wird, um darin aufgenommen zu werden;
- und einen im Innern der Austiefung (26) des Wischerarms (12) angeordneten Haken (36), der einen ersten Schenkel (38) umfaßt, der sich quer von einer Innenfläche (40) eines Flügels (22) der Austiefung (26) aus erstreckt, auf dem der Verbindungsabschnitt (20) der Zuleitung aufliegt und der durch einen in Richtung des oberen Rückens (24) der Austiefung (26) gekrümmten zweiten Schenkel (42) verlängert wird.

2. Scheibenwischer nach Anspruch 1, **dadurch gekennzeichnet**, daß der Führungsring (32) an der Unterkante (34) eines der Flügel (22) der Austiefung (26), an dem den Gelenkmitteln (28) des Wischerarms (12) zugekehrten Längsende (30) der Austiefung (26), angeordnet ist und daß der Ring (32) die Zuleitung an ihrem Eintritt in die Austiefung (26) führt.

3. Scheibenwischer nach Anspruch 1, **dadurch gekennzeichnet**, daß sich der Haken (36) in Längsrichtung auf einem großen Abschnitt der Austiefung (26) erstreckt, um eine Halterinne für die Zuleitung zu bilden.

4. Scheibenwischer nach einem der vorangehenden Ansprüche, **dadurch gekennzeichnet,** daß die Führungsmittel eine Längsverschiebung des Verbindungsabschnitts (20) der Zuleitung ermöglichen, so daß der Verbindungsabschnitt (20) die Annäherungen und Entfernungen des ersten und zweiten Teils der Zuleitung bei den Bewegungen des Wischerarms im Verhältnis zum Fahrzeug ausgleicht, indem er sich im Innern der Austiefung (26) verformt, in der er durch die Führungsmittel (32, 36) gehalten wird.

## Claims

1. Motor vehicle wiper, of the type having a wiper arm (12) which carries, at a first longitudinal end (14), means of articulation (28) on a head (16) for driving in an alternating sweep, and which carries at its opposite end a wiper blade (17), of the type in which the arm has, at least at its first articulation end (14), two parallel longitudinal lateral flanges (22) joined by a top web (24), which delimit between them a cavity (26) open in the direction of a pane to be wiped, and of the type in which the wiper (10) is provided with a device for spraying the pane having a supply pipe which extends along the arm (12) and which has a first part connected to the vehicle, a second part connected to the arm and a portion (20) for the flexible joining of the two parts, which is guided and held inside the cavity (26) of the articulation end (14) of the arm (12) by guidance and holding means (32, 36), characterised in that the guidance and holding means are produced in one piece by moulding from plastics material with the arm (12) and include:
- a guide ring (32), with its axis parallel to the longitudinal direction of the arm (12) and partially open, in which the joining portion (20) of the pipe is introduced radially in order to be received therein; and
- a hook (36) arranged inside the cavity (26) of the arm (12), which has a first branch (38) which extends transversely from an internal face (40) of a flange (22) of the cavity (26), on which the joining portion (20) of the pipe rests and which is extended by a second branch (42) curved in the direction of the top web (24) of the cavity (26).

2. Wiper according to Claim 1, characterised in that the guide ring (32) is arranged on the bottom edge (34) of one of the flanges (22) of the cavity (26), at the longitudinal end (30) of the cavity (26) adjacent to the articulation means (28) of the arm (12), and in that the ring (32) guides the pipe at its entry into the cavity (26).

3. Wiper according to Claim 1, characterised in that the hook (36) extends longitudinally over a large portion of the cavity (26) so as to form a channel for holding the pipe.

4. Wiper according to any one of the preceding claims, characterised in that the guidance means allow a longitudinal sliding of the joining portion (20) of the pipe so that the joining portion (20) compensates for the first and second part of the pipe moving closer together and further away from each other during movements of the arm with respect to the vehicle by deforming inside the cavity (26) in which it is held by the guidance means (32, 36).
